Europäisches Patentamt

European Patent Office

Office européen des brevets

(11) Publication number: **0 450 230 A2**

# EUROPEAN PATENT APPLICATION

(21) Application number: 90312202.6

(51) Int. Cl.5: **G06G 7/12**

(22) Date of filing: 08.11.90

(30) Priority: 02.04.90 JP 87966/90
02.04.90 JP 87967/90

(43) Date of publication of application:
**09.10.91 Bulletin 91/41**

(84) Designated Contracting States:
**DE FR GB**

(71) Applicant: **PIONEER ELECTRONIC CORPORATION**
**No. 4-1, Meguro 1-chome**
**Meguro-ku Tokyo-to(JP)**

(72) Inventor: **Ichikawa, Toshihito, c/o Pioneer Electronic Corp.**
**Kawagoe Works, No. 25-1, Aza-Nishicho**
**Oaza-Yamada, Kawagoe-shi,**
**Saitama-ken(JP)**

(74) Representative: **Brunner, Michael John et al**
**GILL JENNINGS & EVERY 53-64 Chancery Lane**
**London WC2A 1HN(GB)**

(54) Membership function generating circuit.

(57) A membership function generating circuit includes a differential amplifying circuit ($Q_1$, $Q_2$). This amplifying circuit outputs a pair of differential output signals. One has a waveform in the form of S to have a S-function, the other has a waveform in the form of Z to have a Z-function. According to other embodiments, the differential amplifying circuit outputs a pair of differential output signals to deliver them to an output circuit ($Q_9$, $Q_{10}$, $Q_{12}$, $Q_{13}$ ). The output circuit converts the differential outputt signals to a single signal to output it. The lower limit level of this output signal is clamped by a clamping circuit ($Q_{11}$). As the result of this clamping operation, the output signal has a U-function characteristic U-shaped in the signal waveform. In addition, another membership function generating circuit includes a clamping circuit ($Q_{14}$) for clamping the upper limit level of an output signal. By clamping the upper limit level of the output signal, the output signal has a $\pi$-function characteristic $\pi$-shaped in the signal waveform.

*FIG. 1*

This invention relates to a fuzzy inference operation circuit used for various control systems, and more particularly to a membership function generating circuit of S-function, Z-function, U-function and $\pi$-function.

Hitherto, computer controls have mainly required rigorousness of logic. In recent years, attention has been increasingly drawn to so called a fuzzy control using the fuzzy theory by which a way of fuzzy thinking or judgment is quantitatively determined.

In the fuzzy control, an optimum controlled variable is determined by the fuzzy inference operation. In this fuzzy inference, membership values are used. These membership values are given in correspondence with various input signals in the form of a membership function. In the case of carrying out a fuzzy control using a computer, the membership function is given by defining actual numeric values as data table in the memory area.

The fuzzy theory is characterized in that it has flexibility, and can be therefore applied not only to complicated and large scale control systems but also to wide variety of fields. In the case where the fuzzy theory is used for relatively small scale control systems, the provision of a membership function generator capable of easily altering the function characteristic with a relatively simple construction is convenient.

An object of this invention is to provide a membership function generator which can realize a variable characteristic with a relatively simple construction.

A first invention is directed to a membership function generating circuit adapted to output at least one of a S-function signal and a Z-function signal each corresponding to an input signal, which comprises a differential amplifying circuit.

In accordance with the first invention, the differential amplifying circuit generates a Z-function signal, falling down to a low level from a high level, from one of a pair of differential output terminals when an input signal inputted from the input terminal of the differential amplifying circuit crosses the zero level to be turned to a positive level from a negative level. In contrast, an S-function signal rising up to a high level from a low level is generated from the other terminal thereof when an input signal crosses a zero level to be turned to a positive level from a negative level.

As stated above, with a relatively simple construction and by setting circuit constants, it is possible to generate a membership function signal having an arbitrary U-function characteristic.

A second invention is directed to a membership function generating circuit adapted to output a function signal corresponding to an input signal, which comprises a differential amplifying circuit including a differential transistor pair, an output circuit for outputting, from the same output terminal, respective differential output signals from the differential amplifying circuit, and a clamping circuit for clamping a lower limit level of an output signal from the output circuit.

In accordance with the second invention, the differential amplifying circuit generates a pair of differential output signals. These differential output signals are outputted from the same output terminal by the output circuit. The lower limit level of this output signal is clamped by the clamping circuit. At this time, by setting the lower limit level to a level higher than that at the crossing point of the differential output signals, the output signal has so called a U-function characteristic such that according as the potential level of the input signal is turned from the negative level to the positive level, the output signal lowers from a high potential level once to a low potential level, and is then turned to the high potential level for a second time. As stated above, with a relatively simple construction and by setting circuit constants, it is possible to generate a membership function signal having an arbitrary U-function characteristic.

A third invention is directed to a membership function generating circuit adapted to output a function signal corresponding to an input signal, which comprises a differential amplifying circuit including a differential transistor pair, an output circuit for outputting, from the same output terminal, respective differential output signals from the differential amplifier circuit, and a clamping circuit for clamping an upper limit level of an output signal from the output circuit.

Further, in accordance with the third invention, the differential amplifying circuit generates a pair of differential output signals. These differential output signals are outputted from the same output terminal by the output circuit. The upper limit level of this output signal is clamped by the clamping circuit. At this time, by setting the upper limit level to a level lower than that at the crossing point of the differential output signals, the output signal has so called a $\pi$-function characteristic such that according as the potential level of the input signal is turned from the negative level to the positive level, the output signal rises from a low potential level once to a high potential level, and is then turned to the low potential level for a second time. As stated above, with a relatively small construction and by setting circuit constants, it is possible to generate a membership function signal having an arbitrary $\pi$-function characteristic.

In the accompanying drawings:

Fig. 1 is a circuit diagram showing a first embodiment;

Fig. 2 is an input/output characteristic diagram of the circuit in Fig. 1;

Fig. 3 is a circuit diagram showing a second embodiment;

Fig. 4 is a circuit diagram showing a third embodiment;

Fig. 5 is a circuit diagram showing a fourth embodiment;

Fig. 6 is a circuit diagram showing a fifth embodiment of this invention;

Fig. 7 is an input/output characteristic diagram of the circuit shown in Fig. 6;

Fig. 8 is a circuit diagram showing a sixth embodiment of this invention; and

Fig. 9 is an input/output characteristic diagram of the circuit shown in Fig. 8.

## First embodiment

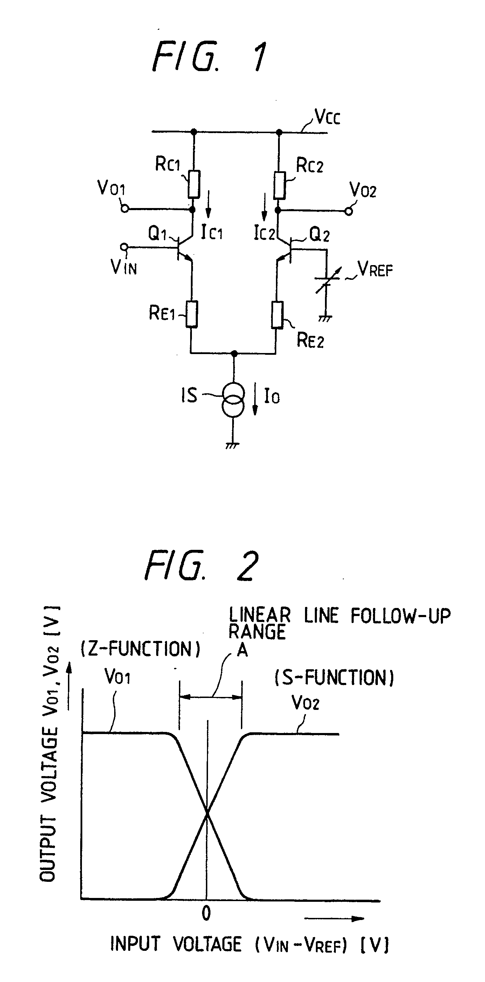

In Fig. 1, a membership function generating circuit comprises a differential amplifying circuit with a plurality of emitter resistors and has a pair of NPN-type bipolar transistors $Q_1$ and $Q_2$ as an amplifier element (hereinafter refer to as transistors).

A first input terminal is connected to the base of the transistor $Q_1$, and an input voltage $V_{IN}$ is inputted thereto. A power supply voltage $V_{CC}$ on a high potential side is applied to the collector thereof through a collector resistor $R_{C1}$, and a first output terminal is drawn out from the collector. An output voltage $V_{O1}$ is outputted therefrom. An emitter resistor $R_{E1}$ is connected to the emitter and a constant current source IS.

A second input terminal is connected to the base of the transistor $Q_2$, and a reference voltage $V_{REF}$ is applied thereto. The reference voltage $V_{REF}$ is given by a reference voltage source. The power supply voltage $V_{CC}$ is applied to the collector through the collector resistor $R_{C2}$. In addition, a second output terminal is drawn out from the collector, and an output voltage $V_{O2}$ is outputted therefrom. One end of an emitter resistor $R_{E2}$ is connected to the emitter. The other end of the emitter resistor $R_{E2}$ and the other end of the emitter resisitor $R_{E1}$ are connected commonly to the constant current source IS.

Fig. 2 shows an input/output characteristic of the differential amplifying circuit. An input voltage is given as $(V_{IN} - V_{REF})$. The output voltage $V_{O1}$ in response to the input voltage $(V_{IN} - V_{REF})$ corresponds to a Z-function while the output voltage $V_{O2}$ corresponds to an S-function. Namely, as the input voltage $(V_{IN} - V_{REF})$ is turned to a positive value from a negative value, the output voltage $V_{O1}$ is changed into a low potential level from a high potential level while the output voltage $V_{O2}$ is changed into a high potential level from a low potential level. In this case, there exists a range (dynamic range) following linearly in accordance with the input voltage $(V_{IN} - V_{REF})$ at the time of zero crossing.

The output amplitudes, i.e., potential levels of output voltages $V_{O1}$ and $V_{O2}$ of this differential amplifying circuit depend upon the constant current $I_O$ and the collector resistors $R_{C1}$ and $R_{C2}$ as indicated by the following equations:

$$V_{O1} = V_{CC} - R_{C1} \cdot I_O$$
$$V_{O2} = V_{CC} - R_{C2} \cdot I_O$$

Accordingly, it is possible to obtain the output voltages $V_{O1}$ and $V_{O2}$ of an arbitrary amplitude by setting the constant current $I_O$ and the collector resistors $R_{C1}$ and $R_{C2}$. Further, the gradient of a linear line changed in the linear follow-up range A depends upon the constant current $I_O$ and the emitter resistors $R_{E1}$ and $R_{E2}$. Accordingly, by arbitrarily setting the constant curent $I_O$ and the emitter resistors $R_{E1}$ and $R_{E2}$, it is possible to provide a plurality of different characteristics. As stated above, by selection of the circuit constants, it is possible to generate a plurality of membership functions having various characteristics.

It is to be noted that if there is employed an arrangement such that the constant current source IS is replaced by a high impedance resistor, a differential amplifying circuit having a function substantially equivalent to the above can be provided. Further, PNP-type transistors may be used in place of the NPN-type transistors $Q_1$ and $Q_2$, respectively. In that case, it is sufficient to apply bias voltage to respective transistors replaced in a manner that they have a polarity opposite to that in Fig. 1.

## Second embodiment

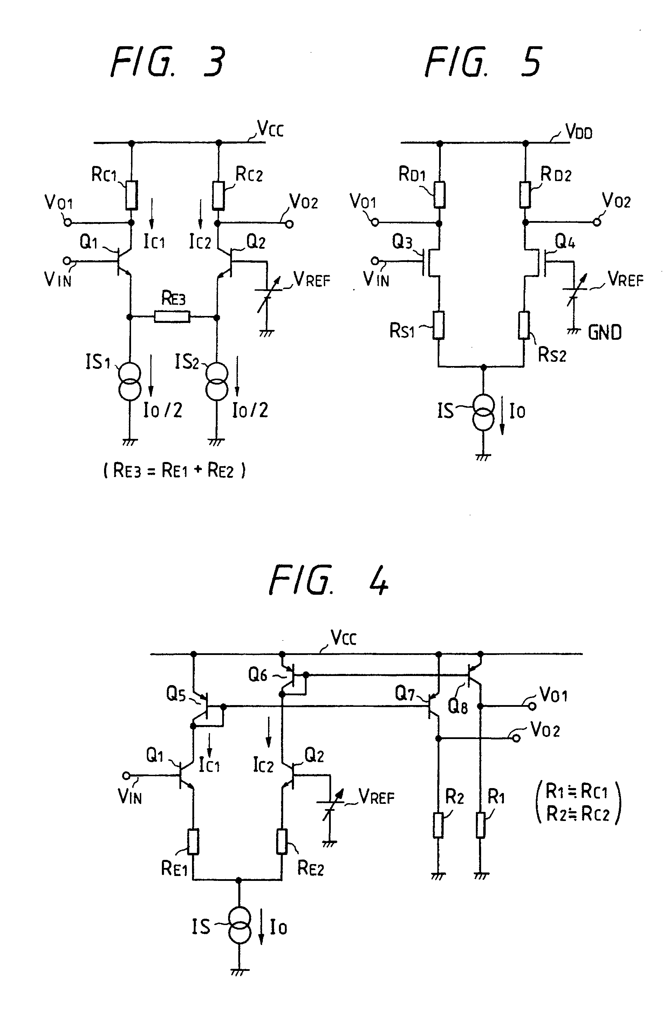

Fig. 3 shows a second embodiment of this invention. The feature of this embodiment resides in structure on the input side thereof. That is, an emitter resistor $R_{E3}$ is provided between both emitters of the respective transistors $Q_1$ and $Q_2$ and two constant current sources $IS_1$ and $IS_2$ are connected to the two transistors $Q_1$ and $Q_2$, respectively. Other elements are the same as those in Fig. 1. In this case, in order to obtain the same characteristics as those in the circuit of Fig. 1, the $R_{E1}$ and $R_{E2}$ are so determined that the sum of the $R_{E1}$ and $R_{E2}$ equals to the emitter resistor $R_{E3}$ ($R_{E3} = R_{E1} + R_{E2}$) and each constant current source is determined at $1/2 \, I_O$. Thus, various membership functions can be obtained.

## Third embodiment

Fig. 4 shows a third embodiment of this invention. The feature of this embodiment resides in the structure on the output side thereof. That is, the output voltages $V_{O1}$ and $V_{O2}$ are taken out from a current mirror circuit which comprises four transistors $Q_5$, $Q_7$, $Q_6$ and $Q_8$. A resistor $R_1$ corresponding to the collector resistor $R_{C1}$ in Fig. 1 is connected to the emitter of the transistor $Q_8$ while a resistor $R_2$ corresponding to the collector resistor $R_{C2}$ is connected to the emitter of the transistor $Q_7$. This structure enables to obtain various membership functions.

### Fourth embodiment

Fig. 5 shows a fourth embodiment in which two field effect transistors (FET) $Q_3$ and $Q_4$ are used.

The input voltage $V_{IN}$ is applied to the gate of the FET$Q_3$ while the $V_{REF}$ is applied to the gate of the FET$Q_4$. A first output terminal is drawn out from the drain of the FET$Q_3$ to enable the output voltage $V_{O1}$ to output. Each of $R_{D1}$ and $R_{D2}$ indicates a drain resistor, each of $R_{S1}$ and $R_{S2}$ indicates a source resistor and $V_{DD}$ indicates a source voltage on the high potential side thereof.

This structure can generate the output voltage $V_{O1}$ and $V_{O2}$ corresonding to a Z-function and a S-function, respectively. The amplitudes of the output voltages $V_{O1}$ and $V_{O2}$ are respectively arbitrarily determined by the constant current $I_O$ and the drain resistors $R_{D1}$ and $R_{D2}$. The gradient of a line in linear line follow-up range A is determined by the constant current $I_O$ and the source resistors $R_{S1}$ and $R_{S2}$. Therefore, various membership functions can be obtained.

### Fifth embodiment

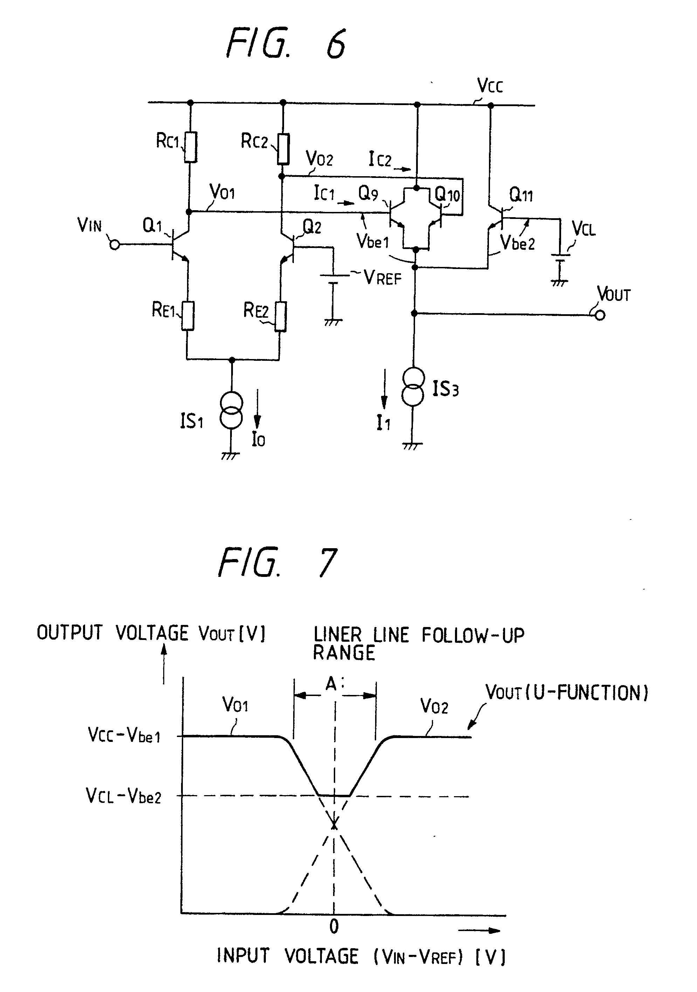

A preferred fifth embodiment of the invention is shown in Fig. 6. In this embodiment, an example of a circuit for generating a U-function as a membership function is disclosed. This circuit is roughly composed of a differential amplifying circuit, an output circuit, and a clamping circuit.

The differential amplifying circuit is comprised of so called a differential amplifying circuit with an emitter resistor wherein a differential pair of NPN-type bipolar transistors $Q_1$ and $Q_2$ are used as an amplifier element.

A first input terminal is connected to the base of the transistor $Q_1$, and an input voltage $V_{IN}$ is inputted thereto. A power supply voltage $V_{CC}$ on a high potential side is applied to the collector through a collector resistor $R_{C1}$.In addition, a first output terminal is drawn out from the collector. An output voltage $V_{O1}$ is outputted therefrom. the transistor $Q_2$, and the reference voltage $V_{REF}$ is delivered thereto. The reference voltage $V_{REF}$ is given by a reference voltage source E. The power supply voltage $V_{CC}$ is applied to the collector through the collector resistor $R_{C2}$.In addition, a second output terminal is drawn out from the collector, and an output voltage $V_{O2}$ is outputted therefrom. An emitter resistor $R_{E2}$ is connected to the emitter. The emitter resistor $R_{E2}$ and $R_{E1}$ are connected commonly to the constant current source $IS_1$.

The output circuit is comprised of an emitter follower circuit including NPN-type transistors $Q_9$ and $Q_{10}$ connected in parallel, and a constant current source $IS_3$. The collectors and the emitters of the transistors $Q_9$ and $Q_{10}$ are connected to each other, respectively. The collector common junction is connected to the high potential side voltage supply $V_{CC}$, and the emitter common junction is connected to the constant current source $IS_3$. An output terminal is drawn out from the emitter common junction, and an output voltage $V_{OUT}$ is outputted from this output terminal. This output voltage $V_{OUT}$ has a U-function characteristic. The base of the transistor $Q_9$ is connected to the collector of the transistor $Q_1$, and the base of the transistor $Q_{10}$ is connected to the collector of the transistor $Q_2$. Accordingly, the output voltage $V_{O1}$ of the transistor $Q_1$ and the output voltage $V_{O2}$ of the transistor $Q_2$ which are the differential output signals are summed by An emitter resistor $R_{E1}$ is connected to the emitter. This emitter resistor $R_{E1}$ is connected to a constant current source $IS_1$.

A second input terminal is connected to the base of the transistors $Q_9$ and $Q_{10}$. Thus, the summed output is outputted as a single output signal output voltage $V_{OUT}$ from the emitter common junction.

The clamping circuit is comprised of an NPN-type transistor $Q_{11}$ and a clamp voltage source $V_{CL}$. The collector of the transistor $Q_{11}$ is connected to the high potential side voltage source $V_{CC}$, the emitter thereof is connected to the emitter common junction of the transistors $Q_9$ and $Q_{10}$, and the clamp voltage source $V_{CL}$ is connected to the base thereof. The operating point of the transistor $Q_{11}$ is determined by a voltage value of the clamp voltage source $V_{CL}$. Accordingly, the emitter potential of the transistors $Q_9$ and $Q_{10}$, i.e., the output voltage $V_{OUT}$ is clamped to a certain potential level.

The operation of the circuit shown in Fig. 6 will now be described with reference to Fig. 7. Fig. 7 is an input/output characteristic diagram of the circuit shown in Fig. 6.

When the input voltage $V_{IN}$ is negative, the transistor $Q_1$ is turned OFF, and the transistor $Q_2$ is turned ON. Accordingly, the output signal $V_{O1}$ from the transistor $Q_1$ indicates a high potential level given by the high potential side voltage source $V_{CC}$, and the output signal $V_{O2}$ from the transistor $Q_2$ indicates a low potential level. Shortly, according as the input voltage $V_{IN}$ is turned from a negative level to a positive level, the transistors $Q_1$ and $Q_2$ shift to ON and OFF states, respectively. As a result, the output signal $V_{O1}$ falls down to a low potential level, whereas the output signal $V_{O2}$ rises up to a high potential level. These differential output voltages $V_{O1}$ and $V_{O2}$ varying in directions opposite to each other are applied to the bases of the transistors $Q_9$ and $Q_{10}$, respectively. When the output signal $V_{O1}$ is at a high potential level, the transistor $Q_9$ is turned ON. On the other hand, when the output signal $V_{O2}$ is at a high potential level, the transistor $Q_{10}$ is turned ON. Accordingly, at the time of the high potential level, the transistor $Q_{10}$ is turned ON. At that time, the output voltage $V_{OUT}$ is given by the emitter potential of the transistors $Q_9$ and $Q_{10}$. The value of the output voltage $V_{OUT}$ becomes equal to $(V_{CC} - V_{be1})$. However, at the time of the low potential level, the emitter potential is clamped to $(V_{CL} - V_{be2})$. Accordingly, the output voltage $V_{OUT}$ is not lowered down to $(V_{CL} - V_{be2})$. As a result, the output voltage has a U-shaped waveform as indicated by the solid line in Fig. 7. Thus, a U-function signal can be generated.

Meanwhile, in the input/output characteristic of the differential amplifying circuit, there exists a range (dynamic range) A following linearly an input voltage $(V_{IN} - V_{REF})$ in a transition state at the time of zero crossing.

The output amplitudes, i.e., potential levels of output voltages $V_{O1}$ and $V_{O2}$ of this differential amplifier circuit depend upon the constant current $I_0$ and the collector resistors $R_{C1}$ and $R_{C2}$ as indicated by the following equations:

$$V_{O1} = V_{CC} - R_{C1} \cdot I_{C1}$$
$$V_{O2} = V_{CC} - R_{C2} \cdot I_{C2}$$
$$I_{C1} + I_{C2} = I_1$$

Accordingly, it is possible to provide output voltage $V_{O1}$ and $V_{O2}$ of an arbitrary amplitude by setting the constant current $I_1$ and the collector resistors $R_{C1}$ and $R_{C2}$. Further, the gradient of a linear line changed in the linear follow-up range A depends upon the constant current $I_1$ and the emitter resistors $R_{E1}$ and $R_{E2}$. Accordingly, by arbitrarily setting the constant current $I_1$ and the emitter resistors $R_{E1}$ and $R_{E2}$, it is possible to provide different characteristics. As stated above, by selection of the circuit constants, it is possible to generate membership functions having various U-function characteristics.

It is to be noted that if there is employed an arrangement such that the constant current source $IS_1$ isreplaced by a high impedance resistor, a differential amplifying circuit having a function substantially equivalent to the above can be provided. Further, PNP-type transistors may be used in place of NPN-type transistors $Q_1$ and $Q_2$, respectively. In that case, it is sufficient to apply bias voltage to respective transistors replaced in a manner that they have a polarity opposite to that in Fig. 6.

Sixth embodiment

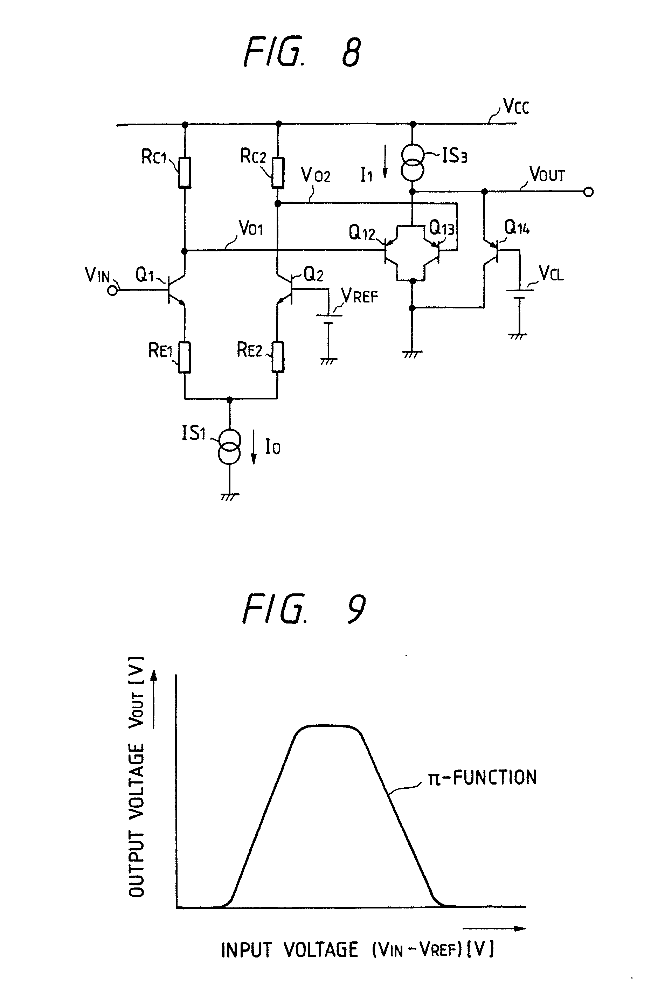

A second preferred sixth embodiment of the invention is shown in Fig. 8. In this embodiment, an example of a circuit for generating a $\pi$-function as a membership function is disclosed. The circuit configuration consists of, in the same manner as in the first embodiment, a differential amplifying circuit, an output circuit, and a clamping circuit. Among them, the configuration of the differential amplifying circuit and the operation thereof are the same as those of the first embodiment. This embodiment differs from the first embodiment in the configurations of the output circuit and the clamping circuit.

The output circuit is comprised of an emitter follower circuit including PNP-type transistors $Q_{12}$ and $Q_{13}$ connected in parallel, and a constant current source $IS_3$. The collectors and the emitters of these transistors $Q_{12}$ and $Q_{13}$ are connected to each other, respectively, the emitter common junction is connected to the high potential side voltage source $V_{CC}$ through the constant current source $IS_3$, and the collector common junction is grounded. An output terminal is drawn out from the emitter common junction, and an output voltage $V_{OUT}$ is outputted from this output terminal. This output voltage $V_{OUT}$ has a $\pi$-function characteristic. The base of the transistor $Q_{12}$ is connected to the collector of the transistor $Q_1$, and the base of the transistor $Q_{13}$ is connected to the collector of the transistor $Q_2$. Accordingly, the output voltage $V_{O1}$ of the transistor $Q_1$ and the output voltage $V_{O2}$ of the transistor $Q_2$ which are the differential output signals are summed by the transistors $Q_{12}$ and $Q_{13}$. Thus, the summed output is outputted as the single output signal output voltage $V_{OUT}$ from the emitter common junction.

The clamping circuit is comprised of a PNP-type transistor $Q_{14}$ and a clamp voltage source $V_{CL}$. The emitter of the transistor $Q_{14}$ is connected to the emitter common junction of the transistors $Q_{12}$ and $Q_{13}$, the collector thereof is connected to the collector common junction of the transistors $Q_{12}$ and $Q_{13}$, and the base thereof is connected to the clamp voltage source $V_{CL}$. The operating point of the transistor $Q_{14}$ is determined by the voltage value of the clamp voltage source $V_{CL}$. Thus, the emitter potential of the transistors $Q_{12}$ and $Q_{13}$, i.e., the output voltage $V_{OUT}$ is clamped to a certain potential level.

The operation of the circuit shown in Fig. 8 will now be described with reference to Fig. 9. Fig. 9 is an input/output characteristic of the circuit shown in Fig. 8.

When the input voltage $V_{IN}$ is negative, the transistor $Q_1$ is turned OFF, and the transistor $Q_2$ is turned ON. Accordingly, the output signal $V_{O1}$ of the transistor $Q_1$ indicates a high potential level given by the high potential side voltage source $V_{CC}$, and the output signal $V_{O2}$ of the transistor $Q_2$ indicates a low potential level. Shortly, according as the input voltage $V_{IN}$ is turned from the negative level to the positive level, the transistors $Q_1$ and $Q_2$ shift to ON and OFF states, respectively. As a result, the output signal $V_{O1}$ falls down to the low potential level, and the output signal $V_{O2}$ rises up to the high potential level. These differential output voltages $V_{O1}$ and $V_{O2}$ varying in directions opposite to each other are delivered to the respective gates of the transistors $Q_{12}$ and $Q_{13}$. When the output signal $V_{O1}$ is at the high potential level, the transistors $Q_{12}$ and $Q_{13}$ are turned OFF and ON, respectively. On the other hand, when the output signal $V_{O2}$ is at the high potential level, the transistors $Q_{12}$ and $Q_{13}$ are turned ON and OFF, respectively. Accordingly, at the time of the high potential level, the output voltage $V_{OUT}$ is given by the emitter potential of the transistors $Q_{12}$ and $Q_{13}$. However, at the time of the low potential level, since the emitter potential of the transistor $Q_{14}$ is clamped to $(V_{CL} + V_{be2})$, the output voltage $V_{OUT}$ does not rise to a value larger than $(V_{CL} + V_{be2})$. As a result, the output voltage $V_{OUT}$ exhibits a $\pi$-shaped waveform as indicated by the solid line in Fig. 9. In this way, a $\pi$-function signal can be generated.

It is to be noted that, in the same manner as in the first embodiment shown in Figs. 6 and 7, in the linear line follow-up range A in Fig. 9, the output amplitudes of output signals $V_{O1}$ and $V_{O2}$ can be changed by the collector resistors $R_{C1}$ and $R_{C2}$, and the gradient of the linear line changed in that range can be altered by the constant current $I_1$ and the emitter resistors $R_{E1}$ and $R_{E2}$.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which comes within the meaning and range of equivalency of the claims are therefore intended to be embraced therein.

## Claims

1. A membership function generating circuit for outputting at least one of an S-function signal and a Z-function signal as a function signal corresponding to an input signal ($V_{IN}$), characterized by a differential amplifying circuit ($Q_1$, $Q_2$, etc).

2. A membership function generating circuit as set forth in claim 1, wherein said differential amplifying circuit comprises at least two bipolar transistors (Q1, Q2) and at least one emitter resistor.

3. A membership function generating circuit as set forth in claim 2, wherein said differential amplifying circuit has a first and a second transistors ($Q_1$, $Q_2$),
a first input terminal being connected to a base of said first transistor ($Q_1$), a first output terminal and a power source on a high potential side through a first resistor ($R_{C1}$) being connected to a collector thereof, a constant current source (IS) being connected to an emitter thereof through a first emitter resistor ($R_{E1}$),
a second input terminal being connected to a base of said second transistor ($Q_2$), a second output terminal and a power source on a high potential side through a second resistor ($R_{C2}$) being connected to a collector thereof, a constant current source (IS) being connected to an emitter thereof through a second emitter resistor ($R_{E2}$).

4. A membership function generating circuit adapted to output a function signal ($V_{OUT}$) corresponding to an input signal ($V_{IN}$), said circuit comprising:
a differential amplifying circuit including a differential transistor pair ($Q_1$, $Q_2$),
an output circuit ($Q_9$, $Q_{10}$) for outputting, from the same output terminal, respective differential output signals from said differential amplifying circuit ($Q_9$, $Q_{10}$), and
a clamping circuit ($Q_{11}$) for clamping a lower limit level of an output signal from said output circuit.

5. A membership function generating circuit as set forth in claim 4, wherein said output circuit is comprised of an emitter follower circuit including an NPN-type transistor pair ($Q_9$, $Q_{10}$), each of gates thereof being connected to an output terminal of said differential transistor pair ($Q_1$, $Q_2$), collectors and emitters thereof being commonly connected to each other, respectively.

6. A membership function generating circuit as set forth in claim 5, wherein said clamping circuit includes an NPN-type transistor ($Q_{11}$) operative in a linear region, having a collector connected to a high potential side power supply, an emitter connected to an emitter common junction of said transistor pair ($Q_9$, $Q_{10}$) of said emitter follower circuit, and a base to which a clamp voltage source ($V_{CL}$) is connected.

7. A membership function generating circuit adapted to output a function signal ($V_{OUT}$) corresponding to an input signal ($V_{IN}$), said circuit comprising:

a differential amplifying circuit including a differential transistor pair ($Q_1$, $Q_2$),

an output circuit ($Q_{12}$, $Q_{13}$) for outputting, from the same output terminal, respective differential output signals of said differential amplifying circuit, and

a clamping circuit ($Q_{14}$) for claiming an upper limit level of an output signal from said output circuit.

8. A membership function generating circuit as set forth in claim 7, wherein said output circuit is comprised of an emitter follower circuit including a PNP-type transistor pair ($Q_{12}$, $Q_{13}$), each of gates thereof being connected to an output terminal of said differential transistor pair ($Q_1$, $Q_2$), collectors and emitters thereof being commonly connected to each other, respectively.

9. A membership function generating circuit as set forth in claim 8, wherein said clamping circuit includes a PNP-type transistor ($Q_{14}$) operative in a linear region, having an emitter connected to a high potential side power supply, a collector connected to a collector common junction of said transistor pair ($Q_{12}$, $Q_{13}$) of said emitter follower circuit, and a base to which a clamp voltage source ($V_{CL}$) is connected.

# FIG. 1

# FIG. 2

# FIG. 3

( $R_{E3}$ = $R_{E1}$ + $R_{E2}$ )

# FIG. 5

# FIG. 4

$\left( \begin{array}{c} R_1 \fallingdotseq R_{C1} \\ R_2 \fallingdotseq R_{C2} \end{array} \right)$

## FIG. 6

## FIG. 7

# FIG. 8

# FIG. 9